# EUROPÄISCHE PATENTANMELDUNG

(11) **EP 1 622 405 A1**
(43) Veröffentlichungstag der Anmeldung: **01.02.2006**
(21) Anmeldenummer: 05010001.5
(22) Anmeldetag: 07.05.2005
(51) Int. Cl.: H04Q 7/28, H04Q 7/38

(54) **Verfahren zur Bestätigungssignalisierung der Empfangsbereitschaft beim Betreiben von Applikationen über Gruppenrufe in Telekommunikationsnetzwerken**

(30) Priorität: 27.07.2004 DE 102004036412
(71) Anmelder: DB Telematik GmbH, 65760 Eschborn (DE)
(72) Erfinder: Rösler, Burkhard, 65817 Eppstein (DE)
(74) Vertreter: Zinken-Sommer, Rainer

(57) **Zusammenfassung**

Die Erfindung betrifft ein Verfahren zum Betreiben von Applikationen über Gruppenrufe in Telekommunikationsnetzwerken, vorzugsweise in funkbetriebenen Netzwerken, wobei in die Gruppenrufe mehrere Teilnehmer eingebunden werden.

Der Erfindung liegt die Aufgabe zugrunde, eine Applikation über Gruppenrufe in Telekommunikationsnetzwerken zu betreiben, die automatisiert, willensunabhängig und hochsicherheitsrelevant ist, so dass die Applikation an den rufenden Teilnehmer aus technischer Sicht exakt gesteuert werden kann.

Dies wird erfindungsgemäß dadurch erreicht, dass
eine Information mittels einer Signalisierungsnachricht automatisch an den Initiator des Gruppenrufes weitergeleitet und dadurch die Empfangsbereitschaft jedes Teilnehmers des Gruppenrufes bestätigt wird, wobei die Signalisierungsnachricht von jedem Teilnehmer des Gruppenrufes bzw. durch eines oder mehrere der am Gruppenruf beteiligten Netzelemente gleichzeitig abgesendet werden kann und über den Signalisierungskanal oder den Nutzkanal der entsprechenden Netzelemente an den Gruppenrufinitiator gesendet wird, so dass durch die Applikation ein definierter Steuerungsprozess weiter geführt wird.

## Beschreibung

Die Erfindung betrifft ein Verfahren zum Betreiben von Applikationen über Gruppenrufe in Telekommunikationsnetzwerken, vorzugsweise in funkbetriebenen Netzwerken, wobei in die Gruppenrufe mehrere Teilnehmer eingebunden werden.

In Telekommunikationswerken (z.B. ISDN, GSM-R, etc.) gibt es ein Leistungsmerkmal mit dem Begriff Gruppenruf bzw. Sammelruf. Ein Gruppenruf ist eine Kommunikationsform, in die eine hohe Anzahl von Teilnehmern involviert werden können (ähnlich wie beim Konferenzruf) und für die nur eine Rufinitiierung durch den Rufenden notwendig ist. Dabei können sich die Teilnehmer in Art und Ausführung grundlegend voneinander unterscheiden (z.B. Dienstanwender, Dispatcher, ISDN-Teilnehmer, TETRA-Teilnehmer, Duplex angebunden, Semiduplex angebunden) und sind für diesem Gruppenruf in der jeweiligen Netzwerkkonfiguration vorkonfiguriert (können somit nicht frei gewählt werden). Diese Konfiguration kann sich auf fest definierte Teilnehmer oder auf flexible Identifikationsnummern beziehen. Die flexiblen Identifikationsnummern werden den einzelnen Teilnehmern als Benutzerrechte zugewiesen und sind dann für alle nutzenden Teilnehmer gleich.

Dabei sind die Gruppenrufe so ausgeführt, dass an den Rufinitiator keine Rückmeldung über die Empfangsbereitschaft zugesendet wird. Der Rufende bekommt lediglich eine Rückmeldung darüber, ob der Ruf erfolgreich aufgebaut worden ist bzw. sich noch erfolgreich im Rufaufbau befindet. Aus diesem Grund ist es nicht möglich, Applikationen zu betreiben, die automatisiert, willensunabhängig bzw. hochsicherheitsrelevant sind. Der exakte Zeitpunkt der Empfangsbereitschaft ist somit nicht sicher bestimmbar.

Bekannt ist ein Verfahren zur Gruppenbildung von Kommunikations-Endgeräten in einem Bündelfunksystem, wobei die Gruppenbildung durch Zuweisung einer der Gruppe zugeordneten dynamischen Gruppenadresse (DGA) zu jedem der Endgeräte der Gruppe in der Weise erfolgt, dass eine Gruppendefinitionsnachricht (GDM) an die Mehrzahl von Endgeräten (MS1-N) erfolgt, in der die dynamische Gruppenadresse (DGA) an eine oder mehrere Bedingungen (C1-N) betreffend einem oder mehrerer Klassifikationsparameter der Endgeräte gebunden ist, die Klassifizierungsparameter in jedem der Endgeräte (MS1-N) darauf überprüft werden, ob die vorgegebenen Bindungen erfüllt sind und eine Zuweisung der dynamischen Gruppenadresse zu jedem der Endgeräte erfolgt, in dem die Bedingungen in dieser Weise erfüllt sind (DE 694 21 515 T2).

Der Nachteil dieses Verfahrens ist, dass die tatsächliche Empfangsbereitschaft eines Teilnehmers nicht exakt bestimmt werden kann.

Darüber hinaus ist ein Verfahren zur Zuteilung von Sprachübertragungszuweisungen in einem Gruppenruf in einem Mobilkommunikationsnetzwerk mit mindestens einer Mobilvermittlung und einer Vielzahl von Basisstationen bekannt, wobei in diesem Verfahren ein Teilnehmer, der zu einer Gruppenrufgruppe gehört und zu sprechen wünscht, eine Sprachübertragungsanforderung über eine Schnittstelle zu einer Mobilvermittlung sendet (DE 694 30 620 T2). Das Verfahren ist in zwei Schritte unterteilt, wobei zuerst Prioritätsdaten durch eine Basisstation oder die Mobilvermittlung erzeugt werden, die in die Sprachübertragungsanforderung eingefügt werden und danach die Sprachübertragungsanforderungen bei mindestens zwei gleichzeitig im Netz befindlichen Teilnehmern eines Gruppenrufes demjenigen zugeteilt werden, der die höchste Priorität aufweist. Dabei wird das Sprachsignal von diesem Teilnehmer zu den anderen Teilnehmern des Gruppenrufes geschaltet.

Der Nachteil dieses Verfahrens ist, dass die Teilnehmer dem Netzwerk nicht zwingend notwendig bekannt sein müssen und somit die Anzahl der Teilnehmer dem Netzwerk und der Applikation unbekannt sind. Die tatsächliche Empfangsbereitschaft kann somit auch hier nicht exakt ermittelt werden.

Der Erfindung liegt die Aufgabe zugrunde, eine Applikation über Gruppenrufe in Telekommunikationsnetzwerken zu betreiben, die automatisiert, willensunabhängig und/oder hochsicherheitsrelevant ist, so dass die Applikation an den rufenden Teilnehmer aus technischer Sicht exakt gesteuert werden kann.

Dies wird erfindungsgemäß dadurch erreicht, dass
eine Information über eine Signalisierungsmessage automatisch an den Initiator des Gruppenrufes weitergeleitet und die Empfangsbereitschaft bestätigt wird, wobei die Signalisierung von jedem Teilnehmer des Gruppenrufes bzw. durch eines oder mehrere der am Gruppenruf beteiligten Netzelemente gleichzeitig abgesendet werden kann und über den Signalisierungskanal oder den Nutzkanal der entsprechenden Netzelemente an den Gruppenrufinitiator gesendet wird, so dass durch die Applikation ein definierter Steuerungsprozess weiter geführt wird.

Der definierte Steuerungsprozess umfasst dabei ein mit einen oder mehreren Teilnehmern simplex oder duplex definierten Steuervorgang, in dem durch die Teilnehmer automatisiert oder manuell Daten oder Informationen ausgetauscht bzw. gesendet werden müssen.
Zur Meldung der Empfangsbereitschaft über den Nutzkanal werden die DTMF-Töne verwendet. Dies hat den Vorteil, dass unter zuvor genannter Verwendung in die Struktur der Netzelemente nicht eingegriffen werden muss und die DTMF-Töne von der Applikation gesendet bzw. empfangen werden können.

Die Rückmeldung der Empfangsbereitschaft wird durch die einzelnen Teilnehmer in einer automatisierten Weise als Gerufene durchgeführt, wobei die Bestätigungssignale zur Vermeidung von Überschneidungen in fest vorgegebenen zeitlichen Abständen realisiert werden.

Wahlweise kann nur durch einen Teilnehmer bzw. durch das Netzelement automatisch ein Bestätigungssignal gesendet werden, wobei die Applikation des Rufenden/Initiators noch einen kurzen definierten Zeitraum (von z.B. 1 Sekunde bis 2 Sekunden) mit der Weiterbearbeitung des Applikationsvorganges nach Empfang der Empfangsbereitschaft wartet.

Ebenfalls wahlweise kann durch alle gerufenen Teilnehmer bzw. beteiligten Netzelemente automatisch eine Bestätigung ihrer Empfangsbereitschaft an den Rufenden/Initiator gesendet werden, wenn die Überschneidung der Signale beim Empfänger keine Auswirkungen auf den vollständigen Empfang aller Nachrichten hat.

Das Verfahren kann gleichfalls für einen Sammelruf verwendet werden. Hierbei ist zu beachten, dass bei einem Sammelruf die Kommunikation durch in eine Richtung durchgeführt werden, jedoch signalisierungstechnisch in beide Richtungen Signale versendet werden können.

Als spezifizierte Signalisierungsnachricht kann auch vorzugsweise CONNECT und/oder ALERT (oder auch andere spezifizierte bzw. noch zu spezifizierende Messages) verwendet werden, wenn die Empfangsbereitschaft über den Signalisierungskanal bzw. Nutzkanal erfolgt.
Die Empfangsbereitschaftsmeldung kann dabei auch von bereits in den Netzelementen implementierten Leistungsmerkmalen erfolgen, wenn diese Leistungsmerkmale durch eine Erweiterung der Software, die diese Leistungsmerkmale abbilden, dauerhaft veranlasst wird (siehe Beispiel Leistungsmerkmal Uplink-Reply GSM-R)

### Vorteile der Erfindung:

- der Rufende erhält automatisch die Empfangsbestätigung aller Gerufenen im Gruppenruf. Somit wird die Realisierung von Applikationen in Gruppenrufen mit den beschriebenen Leistungsmerkmalen möglich.
- eine Unterdrückung der Rückantwort durch den Gerufenen ist nicht möglich
- das System ist hochsicherheitsrelevant durch Verwendung von signalisierungstechnischen Rückmeldungen, die den zeitlichen Anforderungen genügen. Außerdem verkürzen sich gegenüber normalen Punkt zu Punkt - Gesprächen die Rufaufbauzeiten.
- Es können mehrere Teilnehmer in den Gruppenruf gleichzeitig involviert werden. Somit ist die Übermittlung von Information schnell und flexibel möglich.
- Die Einbindung von Teilnehmern in Informationsgruppen kann durch unterschiedliche Gruppen flexibel gestaltet werden.

### Ausführungsbeispiel

Anhand zweier Ausführungsbeispiele soll die Erfindung näher erläutert werden:
Dabei zeigen:
- Figur 1 - die Erfindung eingebettet in verschiedene Kommunikationsnetzwerke
- Figur 2 - die Erfindung eingebettet in ein GSM-R-Netz (gerufener Dienstanwender)
- Figur 3 - die Erfindung eingebettet in ein GSM-R-Netz (gerufener Dispatcher)
- Figur 4 - die Erfindung eingebettet in ein GSM-R-Netz mit ART-Netz

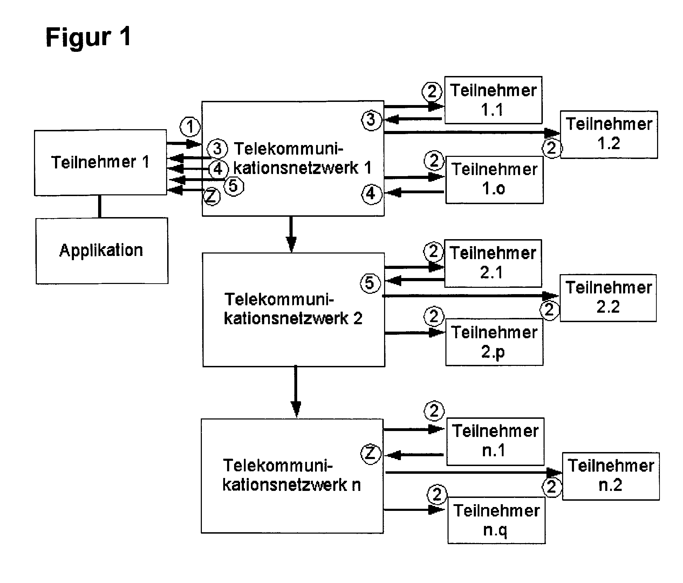

In der Figur 1 ist die Netzinfrastruktur der neuen Bahnmobilfunknetzes und des neuen ISDN-Betriebsnetzes für das Betreiben des Schienenverkehrs bei der DB AG.
Die Gruppenrufe werden wir im folgenden beschrieben dabei aufgebaut:

Ein Dienstanwender oder ein Dispatcher initiiert einen Gruppenruf. Dabei werden während der Rufaufbauphase alle Dispatcher direkt angerufen und über eine Konferenzbrücke in den Gruppenruf eingebunden. Zusätzlich zu diesen maximal 5 Dispatchers werden maximal 25 Funkzellen (die mit Bezug zum Gruppenruf konfiguriert werden können) in den Gruppenruf involviert. In der jeweiligen Funkzelle wird ein Gruppenrufkanal verbindungslos aufgebaut. Befinden sich sogenannte Diensteanwender in den Zellen, in denen der Gruppenrufkanal bezogen auf den aufgebauten Gruppenruf etabliert wurde, dann bekommen diese Diensteanwender den Gruppenruf signalisiert. Die Diensteanwender loggen sich in den Gruppenrufkanal ein. Dabei können sich unendlich viele Diensteanwender in einen Gruppenrufkanal einloggen. Dabei wird zunächst von den Diensteanwendern keine Signalisierung zum Netzwerk gesendet. Die Diensteanwender sind so semiduplex an den Gruppenruf angebunden. Drückt nun ein Diensteanwender die Sprechtaste an seinem Gerät, dann kann er über den Sprechkanal (Gruppenkanal-Uplink) zu allen Teilnehmern sprechen, bis er die Taste wieder los läßt. Während dieser Zeit wird der Sprechkanal für alle anderen Teilnehmer vom Netz gesperrt. Die Dispatcher können alle gleichzeitig im Duplexverfahren in den Gruppenruf sprechen.

Der in diesem Zusammenhang stehende Sammelruf ist im Prinzip ein Gruppenruf, bei dem nur der Rufende Informationen senden und die Gerufenen diese Informationen empfangen können. Es können keine Informationen zurück gesendet werden.

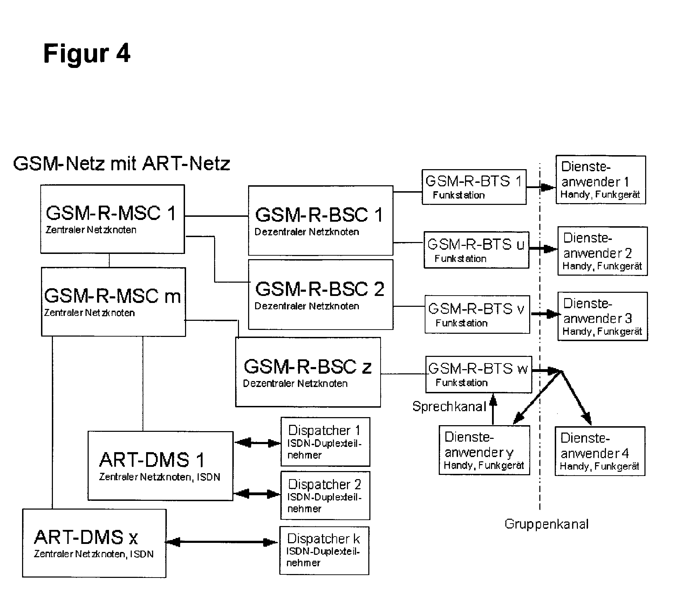

Um die Ressourcen der Netzelemente zu schonen, hat man die Gruppenrufe bzw. Sammelrufe um ein Feature erweitert: Uplink Reply. Bei diesem Feature (Figur 4) wird direkt nach Rufaufbau eine Signalisierungsmessage in den Gruppenkanal der involvierten Zellen mit dem Namen "UPINK FREE" gesendet mit dem Inhalt: "Anfrage Anforderung des Uplinks ("Uplink Request Access"). Befindet sich nun in einer oder mehreren Zellen ein Diensteanwender, dann beantwortet dieser Diensteanwender die Anfrage mit einer Signalisierungsnachricht UPLINK_ACCESS mit dem Inhalt "Antwort der Anfrage Anforderung des Uplinks" ("Reply On Uplink Request Access"). Das Netzwerk wird so darüber in Kenntnis gesetzt, daß sich ein Teilnehmer an dem Ruf teilnimmt. So bleibt der Gruppenrufkanal in der Zelle aktiv. In Zellen, in denen nicht geantwortet wird, wird der Gruppenrufkanal abgebaut.

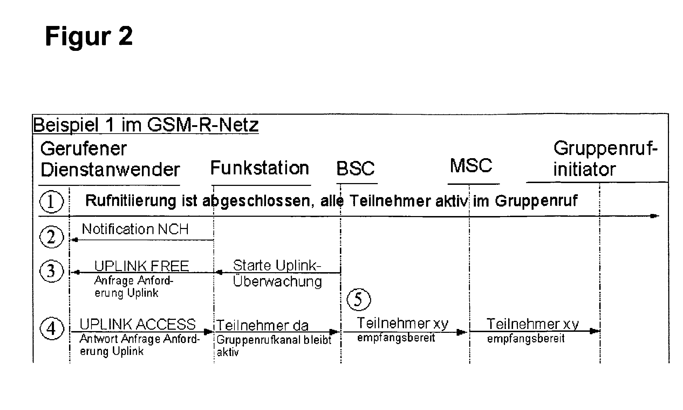

In Figur 2 (Beispiel 1) sind die einzelnen Komponenten der beteiligten Netzstruktur des GSM-R-Netzes dargestellt: Gerufener Diensteanwender, Funkstation, BSC = Funkstationsverwaltungsknoten, MSC = Zentraler GSM-R-Netzknoten und Gruppenrufinitiator.

Bei dem Gruppenrufinitiator kann es sich sowohl um einen Diensteanwender als auch um einen Dispatcher handeln. Punkt 1.: Der Gruppenrufinitiator baut den Gruppenruf auf. Alle Teilnehmer nehmen danach am Gruppenruf teil. Vom Netzwerk wird unter Punkt 3. nach einem Teilnehmer in allen beteiligten Funkzellen gefragt. Unter Punkt 4. antwortet der Teilnehmer und der Gruppenrufkanal bleibt geschaltet. Bis zu diesem Punkt ist alles bereits vom Systemhersteller implementiert bzw. spezifiziert. In den folgenden Zeilen wäre die zu patentierende Lösung dargestellt: Die Information, daß ein Teilnehmer nun am Gruppenruf teilnimmt, kann über den Signalisierungskanal der entsprechenden Netzelemente nun an den Gruppenrufinitiator weiter geleitet werden. Die Empfangsbereitschaft ist somit bestätigt und die Applikation kann den dort definierten Steuerprozess weiter führen.
Beispiele für spezifizierte Signalisierungsnachrichten, die verwendet werden könnten: CONNECT, ALERT. Die jeweilige Anpassung der Softwareroutinen erfolgt für diesen Fall in allen beteiligten Netzelementen.

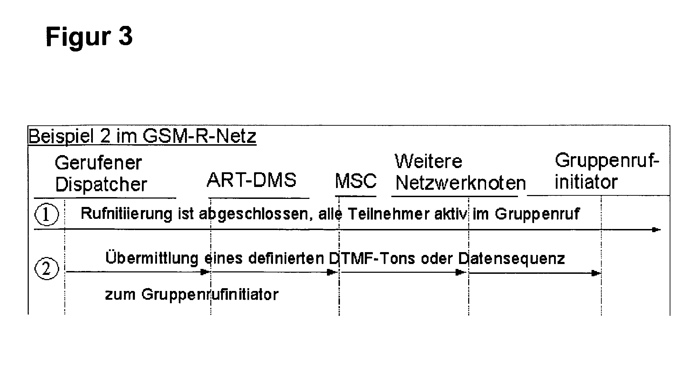

Im Beispiel 2 (Figur 3) handelt es sich im Gegensatz des Beispiel 1 um einen Dispatcher als Gerufener. Unter Punkt 1 des Beispiels 2 wird der Gruppenruf aufgebaut. Alle Teilnehmer sind in den Gruppenruf aktiv. Der gerufene Dispatcher sendet an den Rufenden eine Signalisierung zur Bestätigung der Empfangsbereitschaft. Hierzu werden definierte DTMF-Töne oder definierte Datensequenzen übersendet, die die Empfangsbereitschaft beim Rufenden bestätigen. Der gerufene Dispatcher bzw. dessen Applikation kann nun den definierten Steuerungsprozess fortsetzen.

Im folgenden ist eine Beispielapplikation genannt:

**Bahnhofsbeschallungsanlage:** Ein kleiner Bahnhof hat zwei Bahngleise bezeichnet mit Gleis 1 und Gleis 2. An jedem Gleis ist eine Beschallungsanlage installiert.
- Gleis 1 hat eine Beschallungsanlage mit einer Telekommunikationsanlage, bezeichnet mit Diensteanwender 1.
- Gleis 2 hat entsprechend den Dienstanwender 2.

Die Diensteanwender sind GSM-R- Funkmodule. Die jeweiligen Gruppenrufnummern sind wie folgt definiert: Dienstanwender 1 ist für die Gruppenrufnummern 260 und 261, Diensteanwender 2 ist für die Gruppenrufnummern 260 und 262 konfiguriert. Als Jeweiliger Gruppenrufinitiator ist ein Dipstatcher vorhanden, der die jeweiligen Gruppenrufe mit den zuvor beschriebenen Gruppenrufnummern initiieren kann. Für die Gruppenrufnummer 260 werden somit beide Diensteanwender in den Gruppenruf involviert.
Der Dispatcher baut nun einen Gruppenruf mit der GID261 auf. Es wird der Dienstanwender 1 zur Beschallung des Gleises 1 in den Gruppenruf involviert. Der Gruppenruf hat nun einen Teilnehmer. Wie im Beispiel 1 dargestellt wird die Empfangsbereitschaft an den Gruppenrufinitiator gesendet. Die Beschallungsanlage hat eine automatisierte Ansage gespeichert, die nach der Bestätigung der Empfangsbereitschaft abgesendet wird. Sie hat den Text
"An Gleis 1 bitte Vorsicht ! Treten Sie hinter die weiße Linie zurück ! ICE fährt mit Höchstgeschwindigkeit am Gleis 1 vorbei !".

Kurze Zeit später wird ein Gruppenruf mit der Gruppenrufnummer 260 vom Dispatcher aufgebaut. Von beiden Dienstanwendern wird nun wie im Beispiel 1 gezeigt die Empfangsbereitschaft bestätigt. Die Applikation sendet die automatische Durchsage
"Sehr geehrte Damen und Herren ! Die ICE xyz hat 10 Minuten Verspätung und fährt statt auf Gleis 1 auf Gleis 2 ein !"

## Patentansprüche

1. Verfahren zum Betreiben von Applikationen über Gruppenrufe in Telekommunikationsnetzwerken, vorzugsweise in funkbetriebenen Netzwerken, wobei in die Gruppenrufe mehrere Teilnehmer eingebunden werden,
***gekennzeichnet dadurch, dass***
eine Information über eine Signalisierungsmessage automatisch an den Initiator des Gruppenrufes weitergeleitet und die Empfangsbereitschaft bestätigt wird, wobei die Signalisierung von jedem Teilnehmer des Gruppenrufes bzw. durch eines oder mehrere der am Gruppenruf beteiligten Netzelemente gleichzeitig abgesendet werden kann und über den Signalisierungskanal oder den Nutzkanal der entsprechenden Netzelemente an den Gruppenrufinitiator gesendet wird, so dass durch die Applikation ein definierter Steuerungsprozess weitergeführt wird.

2. Verfahren nach Anspruch 1, ***gekennzeichnet dadurch, dass*** der definierte Steuerungsprozess mit einen oder mehreren Teilnehmern simplex oder duplex definierten Datenaustausch bzw. Informationsaustausch durchgeführt wird.

3. Verfahren nach Anspruch 1 und 2, ***gekennzeichnet dadurch, dass*** die DTMF-Töne zur Meldung der Empfangsbereitschaft über den Nutzkanal bzw. Signalisierungskanal verwendet werden.

4. Verfahren nach Anspruch 1 bis 3, ***gekennzeichnet dadurch, dass*** die Rückmeldung der Empfangsbereitschaft durch die einzelnen Teilnehmer in einer automatisierten Weise als Gerufene durchgeführt wird, wobei die Bestätigungssignale zur Vermeidung von Überschneidungen in fest vorgegebenen zeitlichen Abständen realisiert wird.

5. Verfahren nach Anspruch 1 bis 4, ***gekennzeichnet dadurch, dass*** nur durch einen bzw. nicht durch alle beteiligten Teilnehmer automatisch ein Bestätigungssignal gesendet wird, wobei die Applikation des Rufenden/Initiators noch einen kurzen zu definierenden Zeitraum mit der Weiterbearbeitung des Applikationsvorganges wartet.

6. Verfahren nach Anspruch 1 bis 5, ***gekennzeichnet dadurch, dass*** durch alle gerufenen Teilnehmer automatisch eine Bestätigung ihrer Empfangsbereitschaft an den Rufenden/Initiator gesendet werden.

7. Verfahren nach Anspruch 1 bis 6, ***gekennzeichnet dadurch, dass*** das Verfahren gleichfalls für einen Sammelruf verwendet wird.

8. Verfahren nach Anspruch 1 bis 8, ***gekennzeichnet dadurch, dass*** eine spezifizierte oder noch zu spezifizierende Signalisierungsnachricht (z.B. CONNECT und/oder ALERT) verwendet werden.

9. Verfahren nach Anspruch 1 bis 9, ***gekennzeichnet dadurch, dass*** zu sendende Datensequenzen bzw. Daten allgemein zur Meldung der Empfangsbereitschaft über den Nutzkanal bzw. Signalisierungskanal verwendet werden.

10. Verfahren nach Anspruch 1 bis 9, ***gekennzeichnet dadurch, dass*** die zurück zu sendende Bestätigung der Empfangsbereitschaft auch durch Netzelemente erfolgen kann, wenn dabei im Netz implementierte Leistungsmerkmale genutzt und weiter entwickelt werden (Beispiel:Uplink_Reply - Leistungsmerkmal im GSM-R-Netz).
